# FASCICULE DE BREVET EUROPEEN

(11) **EP 1 553 233 B1**
(45) Date de publication et mention de la délivrance du brevet: **16.07.2008**
(21) Numéro de dépôt: 04292916.6
(22) Date de dépôt: 08.12.2004
(51) Int. Cl.: E03F 5/06

(54) **Bouche d'égout**
Bodenablauf
Floor drain

(30) Priorité: 23.12.2003 FR 0315318
(43) Date de publication de la demande: 13.07.2005
(73) Titulaire: NORINCO, 60149 Saint Crepin Ibouvillers (FR)
(72) Inventeur: Monneret, Jean-Jacques, 69003 Lyon (FR)
(74) Mandataire: Thinat, Michel

(56) Documents cités:
- AU-B- 495 515
- DE-A- 1 459 589
- DE-A- 2 559 080
- GB-A- 2 355 038

## Description

La présente invention concerne une bouche d'égout.

On connaît une bouche d'égout comprenant un cadre généralement rectangulaire pouvant être incorporé à une chaussée, de préférence le long d'une bordure de trottoir délimitant la chaussée. Ce cadre comporte sur l'un de ses côtés, le côté longitudinal adjacent à la bordure du trottoir, des éléments d'articulation coopérant avec des éléments d'articulation situés à l'un des côtés de chacune des deux grilles carrées disposées côte à côte de fermeture du cadre, chaque grille comportant des barreaux parallèles inclinés suivant le sens d'écoulement d'eau de ruissellement le long de la chaussée pour absorber l'eau de ruissellement entre les barreaux des grilles.

Cette bouche d'égout connue a pour inconvénient de nécessiter deux modèles de grilles carrées à barreaux inclinés pour tenir compte du sens d'écoulement de l'eau de ruissellement le long de la chaussée, c'est-à-dire une grille carrée pouvant être articulée au côté correspondant du cadre de support de manière à orienter les barreaux inclinés dans un sens d'écoulement d'eau de ruissellement et une autre grille carrée pouvant être articulée au côté du cadre de manière que les barreaux soient inclinés en sens inverse d'écoulement d'eau de ruissellement. Ce problème se posé également pour un même cadre de support installé en bordure du trottoir opposé de la chaussée et dont les deux grilles carrées à barreaux inclinés articulées au côté du cadre adjacent à la bordure de trottoir doivent être différentes des deux grilles articulées au cadre de l'autre trottoir au niveau de l'emplacement de leurs articulations à ce côté du deuxième cadre pour que les barreaux inclinés des grilles soient orientés dans le sens correspondant au sens d'écoulement de l'eau de ruissellement.

AU-B-495 515 décrit une bouche d'égout comportant deux grilles à barreaux inclinés pouvant être montées sur un cadre de support de manière que la grille ne puisse pas être retirée de ce cadre dans le but d'empêcher un retrait non autorisé de la grille de ce cadre. Ce document ne pose ni ne résout le problème de l'invention tel qu'exposé précédemment.

GB-A-2 355 038 décrit une bouche d'égout comprenant un cadre et une grille à barreaux pouvant être montée articulée à l'un ou l'autre de deux côtés opposés du cadre dans le but de monter correctement la grille suivant la direction prévalente de circulation de véhicules automobiles. Ce document ne s'adresse pas au problème de l'invention et ne propose pas de solution résolvant ce problème.

DE 25 59 080 décrit une grille de bouche d'égout dont les barreaux sont convexes à leurs côtés supérieurs autour d'un axe s'étendant dans la direction longitudinale des barreaux de telle sorte que chaque côté supérieur soit abaissé par rapport au bord situé dans la direction d'écoulement des eaux de pluie dans le but de faire pénétrer ces eaux de pluie directement entre les barreaux de grille.

Le document DE 1 459 589 décrit également une grille d'une bouche d'égout dont les barreaux en biais par rapport à la direction d'écoulement des eaux de pluie dans l'entrée de la grille permettent d'entraîner des déchets à travers l'entrée et vers le bas de la grille et d'évacuer les eaux de pluie même en cas de trombes d'eaux.

Ni l'une ni l'autre de ces deux bouches d'égout connues sont du type articulé à un cadre et, en tout cas, ne pose ni ne résoud le problème de l'invention tel qu'exposé précédemment.

La présente invention a pour but d'éliminer les inconvénients ci-dessus en proposant une bouche d'égout comprenant les caractéristiques énoncées dans la revendication 1.

La bouche d'égout comprend une seconde grille carrée à barreaux inclinés comprenant des premier et second éléments d'articulation respectivement à deux de ses côtés adjacents et pouvant être montée articulée par l'un de ses côtés adjacents au côté à éléments d'articulation du cadre en forme de rectangle en étant disposée côte à côte avec la première grille de manière que ses barreaux soient inclinés dans le sens d'écoulement d'eau de ruissellement le long de la chaussée pour absorber l'eau de ruissellement entre les barreaux de la seconde grille, les barreaux de la seconde grille pouvant être parallèles ou non à ceux de la première grille suivant le sens d'écoulement d'eau de ruissellement arrivant à la seconde grille.

Avantageusement, la bouche d'égout comprend un deuxième cadre en forme de quadrilatère identique au cadre précité et apte à recevoir au moins une grille identique à l'une des grilles précitées de manière à être montée articulée par l'un de ses côtés adjacents au côté à éléments d'articulation du deuxième cadre et les deux cadres peuvent être assemblés jointivement par leurs côtés respectifs par un tenon solidaire du côté de l'un des deux cadres et une fenêtre du côté adjacent de l'autre cadre dans laquelle s'engage le tenon.

L'invention sera mieux comprise, et d'autres buts, caractéristiques, détails et avantages de celle-ci apparaîtront plus clairement de la description explicative qui va suivre faite en référence aux dessins schématiques annexés donnés uniquement à titre d'exemple illustrant plusieurs modes de réalisation de l'invention et dans lesquels :
- la figure 1 est une vue de dessus d'une bouche d'égout suivant un premier mode de réalisation de l'invention, installé en bordure de deux trottoirs opposés délimitant une chaussée ;
- la figure 2 est une vue de dessus d'une bouche d'égout selon un second mode de réalisation de l'invention ;
- la figure 3 est une vue de dessus d'une bouche d'égout de la figure 2 suivant un troisième mode de réalisation ;
- la figure 4 est une vue agrandie en perspective de la partie cerclée en IV de la figure 3 et représentant un exemple de réalisation d'une articulation d'une grille au cadre de la bouche d'égout des figures 1 à 3 ;
- la figure 5 est une vue en coupe suivant la ligne V-V de la figure 4 ; et
- la figure 6 est une vue agrandie en perspective de la partie cerclée en VI de la figure 3.

L'équipement de voirie ou dispositif de couronnement formant bouche d'égout de l'invention va être décrit comme étant installé en bordure de trottoirs d'une chaussée, mais il est bien entendu qu'il peut être installé à tout autre endroit de réception d'eau de ruissellement.

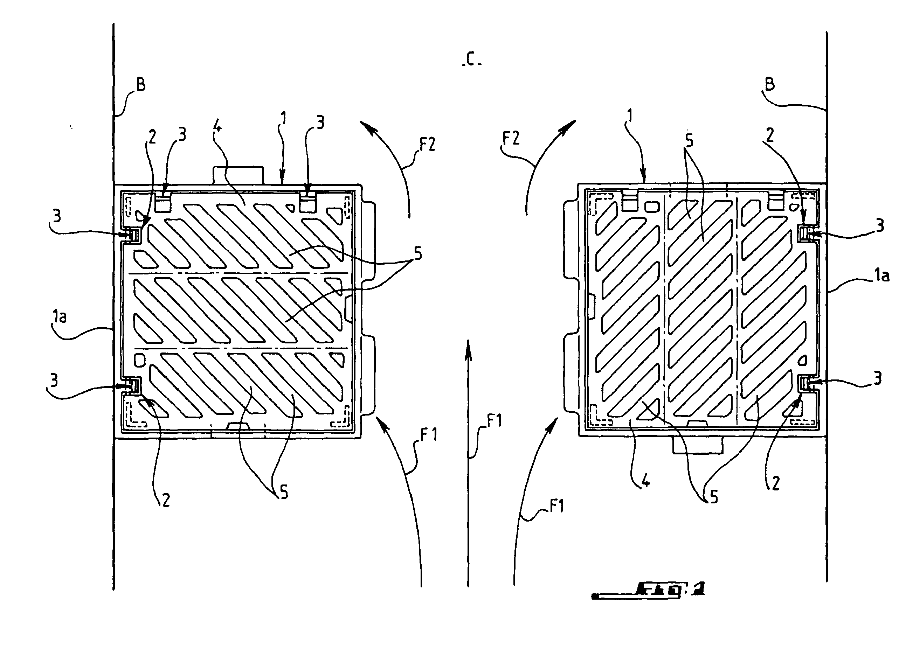

En se reportant à la figure 1, l'équipement de voirie comprend deux cadres carrés identiques 1 incorporés à une chaussée C respectivement le long de deux bordures de trottoirs opposées B délimitant la chaussée.

Chaque cadre 1 a un seul de ses côtés 1a adjacent à la bordure B pourvu d'éléments d'articulation 2 auxquels sont reliés des éléments d'articulation 3 situés à un côté d'une grille carrée 4 à barreaux parallèles inclinés 5 de manière à permettre à la grille 4 de pivoter autour du côté 1a d'une position de fermeture du cadre 1 en reposant sur ce dernier à une position relevée d'ouverture de ce cadre à laquelle la grille 4 peut être retenue au cadre 1 par les éléments d'articulation 2, 3 tout en permettant son retrait du cadre à cette position relevée.

Les barreaux inclinés 5 de chacune des deux grilles carrées opposées 4 occupant leur position de fermeture du cadre 1 sont orientés dans le sens d'écoulement d'eau de ruissellement le long de la chaussée C et qui est symbolisé par les flèches F1 de manière que l'eau de ruissellement arrivant aux deux cadres 1 puisse s'écouler et être absorbée librement dans les espaces entre barreaux parallèles inclinés 5 des deux grilles 4.

Selon l'invention, chaque grille 4 comporte également à l'un de ses côtés adjacents à celui articulé au côté 1a du cadre 1 des éléments d'articulation 3 identiques aux éléments d'articulation 3 du côté articulé au cadre 1 de manière qu'une grille 4 puisse être montée articulée par l'un de ses deux côtés adjacents au côté 1a du cadre 1 en ayant ses barreaux inclinés 5 pouvant être orientés suivant le sens d'écoulement F1 de l'eau de ruissellement. Ainsi, si le sens d'écoulement F1 de l'eau de ruissellement devait être opposé à celui représenté en figure 1, il suffira alors de tourner chaque grille 4 de 90° autour de son axe central de symétrie comme indiqué par les flèches F2 pour engager les éléments d'articulation 3 du côté adjacent libre de la grille avec les éléments d'articulation 2 du côté la du cadre 1 pour que les barreaux 5 soient inclinés dans le sens opposé d'écoulement de l'eau de ruissellement le long de la chaussée C.

Comme cela ressort de la figure 1, les deux cadres 1 étant identiques, pour installer un cadre 1 d'un trottoir à l'autre, il suffit de le faire pivoter autour de son axe central de symétrie de 180°. Une grille 4 de l'invention peut alors être montée articulée au côté la de chaque cadre 1 par l'un de ses deux côtés adjacents de manière que ses barreaux soient orientés suivant le sens d'écoulement F1 de l'eau de ruissellement.

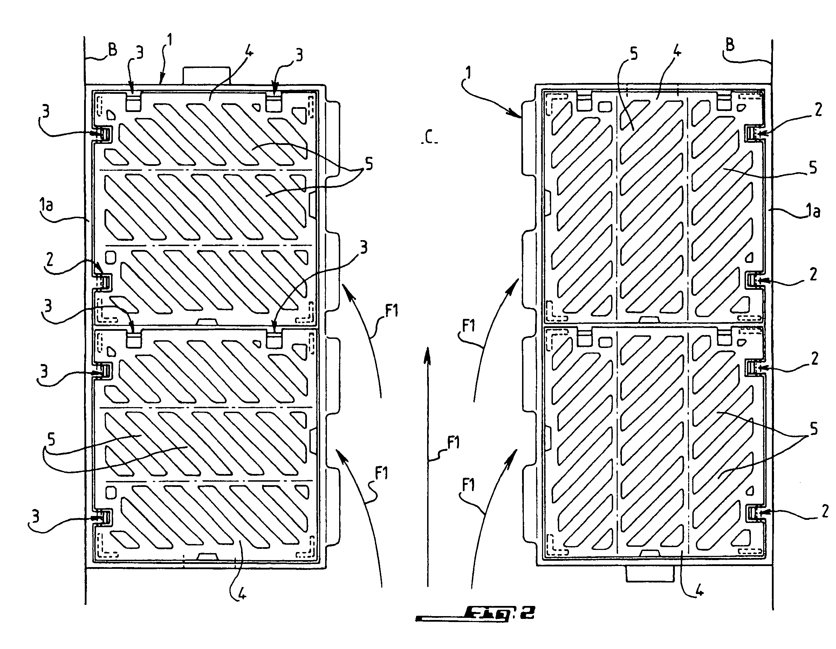

La figure 2 représente une variante de réalisation selon laquelle chaque cadre 1 est rectangulaire en ayant l'un de ses côtés longitudinaux 1a disposé adjacent à la bordure de trottoir correspondante B et auquel sont montées articulées deux grilles carrées identiques 4 à barreaux inclinés 5 permettant de fermer le cadre 1 en étant posées côte à côte sur ce dernier. Comme pour le mode de réalisation de la figure 1, chaque grille 4 est réversible, c'est-à-dire qu'elle comporte des éléments d'articulation 3 sur deux de ses côtés adjacents de manière à monter la grille articulée au côté 1a du cadre 1 suivant le sens souhaité d'orientation des barreaux inclinés 5 tenant compte du sens d'écoulement de l'eau de ruissellement sur la chaussée C.

La figure 2 montre que les barreaux inclinés 5 des deux paires de grilles 4 situés respectivement le long des deux bordures B des trottoirs opposés sont orientés suivant le sens correspondant à celui d'écoulement F1 de l'eau de ruissellement et il est possible, pour chaque cadre 1, de monter articulées les deux grilles 4 au côté 1a du cadre 1 par leurs articulations libres 3 de leurs côtés adjacents pour que leurs barreaux respectifs 5 soient orientés dans le sens d'écoulement de l'eau de ruissellement opposé au sens F1 de la figure 2 si l'eau de ruissellement devait s'écouler sur la chaussée dans le sens opposé. Il est également possible pour chaque cadre 1 de prévoir une grille 4 montée articulée au côté la du cadre 1 dans un sens correspondant au sens F1 d'écoulement de l'eau de ruissellement comme cela est le cas en figure 2, par exemple, pour les deux grilles inférieures 4 respectivement des deux cadres 1 et d'articuler chacune des deux grilles supérieures 4 de ces cadres par rotation de 90° autour de son axe central de symétrie de la grille 4 de manière que les barreaux 5 de chaque grille supérieure 4 soient orientés dans un sens d'écoulement d'eau de ruissellement opposé à celui F1. Tel pourrait être le cas lorsque les eaux de ruissellement peuvent s'écouler sur la chaussée C en sens opposés vers le cadre 1 de chaque côté du trottoir lorsque chaque cadre 1 est installé entre deux pentes convergeant l'une vers l'autre de la chaussée.

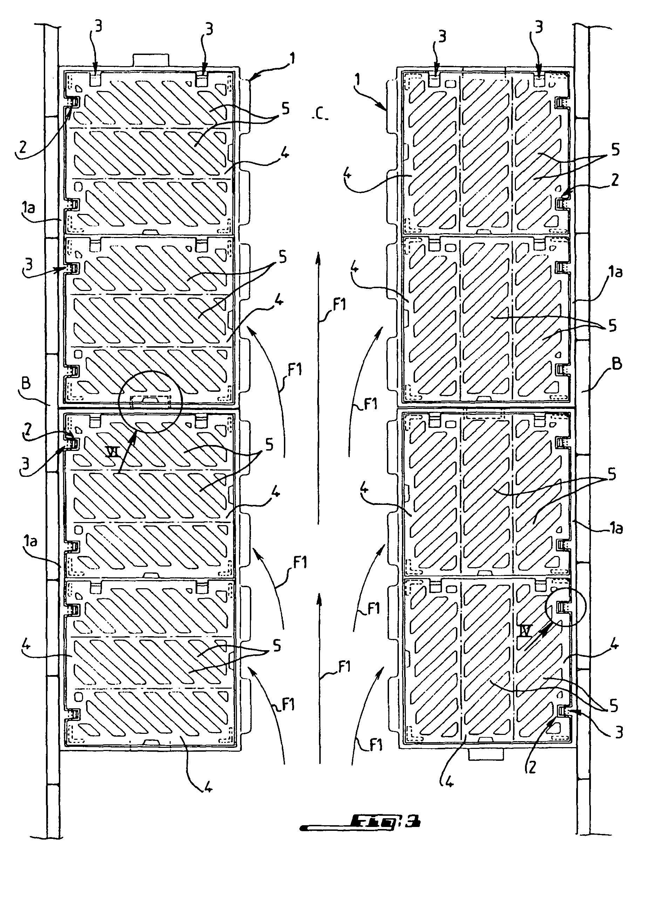

La figure 3 représente une variante de réalisation de la figure 2 selon laquelle deux cadres rectangulaires 1 sont installés à la chaussée C en prolongement l'un de l'autre le long de chaque bordure de trottoir B. Bien entendu, chaque grille 4 comporte sur deux de ses côtés adjacents des éléments d'articulation 3 comme en figure 1 et peut être montée au côté longitudinal 1a de chaque cadre 1 par l'un ou l'autre de ses côtés adjacents selon le sens d'écoulement de l'eau de ruissellement sur la chaussée C. Ainsi, les deux grilles 4 de chaque cadre 1 situé en partie supérieure de la figure 3, pourraient être orientées différemment pour tenir compte d'un sens d'écoulement différent de l'eau de ruissellement sur la chaussée C en les faisant chacune pivoter de 90° autour de leur axe central de symétrie de manière à les monter articulées au côté 1a du cadre 1 par les éléments d'articulation 3 du côté adjacent libre de chaque grille.

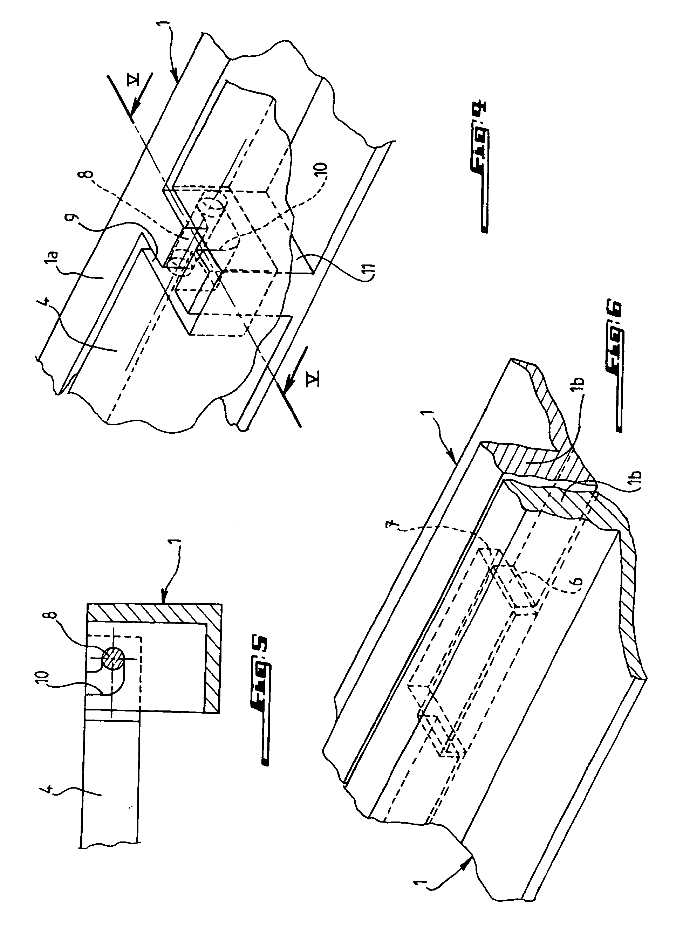

Comme cela ressort de la figure 6, deux cadres rectangulaires 1 situés le long d'une bordure de trottoir B peuvent être assemblés jointivement par leurs petits côtés respectifs 1b transversaux à la bordure B par un tenon 6 solidaire de l'une des parois constituant le côté 1b d'un cadre et une fenêtre 7 dans laquelle s'engage le tenon 6 et réalisée au travers de la paroi constituant le côté adjacent 1b de l'autre cadre 1.

Les figures 4 et 5 représentent, à titre d'exemple, chaque articulation, connue en soi, reliant une grille 4 au côté 1a du cadre 1. Chaque articulation 2, 3 comprend un axe cylindrique 8 d'une chape 9 formée au côté correspondant d'une grille 4 et un évidement 10 formé au travers d'une portion de paroi transversale 11 solidaire du côté 1a du cadre 1 et engagée dans la chape 9. L'évidement 10 comporte un passage vertical de l'axe 8 prolongé par un passage horizontal vers le côté 1a du cadre 1 de manière qu'en position de fermeture de la grille 4, l'axe 8 soit situé dans le passage horizontal pour empêcher ainsi le soulèvement de la grille 4 du cadre 1.

Selon l'équipement de voirie de l'invention, un seul modèle de grille réversible permet de l'adapter à la chaussée, en tenant compte du sens d'écoulement de l'eau de ruissellement arrivant au cadre comportant la ou les grilles réversibles. Bien entendu, les cadres de support des grilles peuvent être installés différemment dans la chaussée. Par exemple, chaque cadre rectangulaire peut être orienté transversalement à la bordure du trottoir en ayant l'un de ses petits côtés adjacent à cette bordure, l'un de ses grands côtés comportant les éléments d'articulation de chaque grille. Par rapport à l'agencement de la figure 3, les deux cadres supérieurs peuvent être installés comme représenté à cette figure parallèlement à leurs bordures respectives de trottoirs et les deux cadres inférieurs peuvent être installés perpendiculairement à ces deux bordures.

## Revendications

1. Bouche d'égout, comprenant un cadre (1) en forme de quadrilatère pouvant être incorporé à une chaussée (C) et comportant sur un seul (1a) de ses côtés des éléments d'articulation (2), et au moins une grille carrée (4) de fermeture du cadre (1) comportant des barreaux parallèles inclinés (5) par rapport aux côtés de la grille (4) et des premiers éléments d'articulation (3) à l'un de ses côtés coopérant avec ceux (2) du côté du cadre (1) pour lui permettre d'être montée articulée à ce côté, **caractérisée en ce que** la grille (4) comprend également des seconds éléments d'articulation (3) disposés à l'un des côtés de la grille (4) adjacent à celui comportant les premiers éléments d'articulation (3) pour permettre à la grille (4) d'être montée articulée au côté (1a) du cadre (1) par l'un ou l'autre de ses côtés adjacents de manière que les barreaux (5) de la grille (4) soient inclinés relativement au côté d'articulation (1a) du cadre (1) dans le sens d'écoulement d'eau de ruissellement le long de la chaussée pour absorber l'eau entre les barreaux (5) de la grille (4).

2. Bouche d'égout selon la revendication 1, **caractérisée en ce qu'**elle comprend une seconde grille carrée (4) à barreaux inclinés (5) comprenant des premiers et seconds éléments d'articulation (3) respectivement à deux de ses côtés adjacente et pouvant être montée articulée par l'un de ses côtés adjacents au côté (1a) à éléments d'articulation (2) du cadre (1) en forme de rectangle en étant disposée côte à côte avec la première grille (4) de manière que ses barreaux (5) soient inclinés dans le sens d'écoulement d'eau de ruissellement le long de la chaussée pour absorber l'eau de ruissellement entre les barreaux (5) de la seconde grille (4), les barreaux (5) de la seconde grille (4) pouvant être parallèles ou non à ceux de la première grille (4) suivant le sens d'écoulement d'eau de ruissellement arrivant à la seconde grille.

3. Bouche d'égout selon la revendication 1 ou 2, **caractérisée en ce qu'**elle comprend un deuxième cadre (1) en forme de quadrilatère identique au cadre (1) précité et apte à recevoir au moins une grille (4) identique à l'une des grilles (4) précitées de manière à être montée articulée par l'un de ses côtés adjacents au côté (1a) à éléments d'articulation (2) du deuxième cadre (1) et **en ce que** les deux cadres (1) peuvent être assemblés jointivement par leurs côtés respectifs par un tenon (6) solidaire du côté de l'un des deux cadres (1) et une fenêtre (7) du côté adjacent de l'autre cadre (1) dans laquelle s'engage le tenon (6).

## Claims

1. Gully, comprising a frame (1) in the form of a quadrilateral which can be incorporated into a roadway (C) and which is provided on only one (1a) of its sides with hinge elements (2), and at least one square grating (4) for closing the frame (1) including parallel bars (5) inclined relative to the sides of the grating (4) and first hinge elements (3) on one of its sides cooperating with those (2) on the side of the frame (1) so that it can be hinged to this side, **characterised in that** the grating (4) also comprises second hinge elements (3) disposed on one of the sides of the grating (4) adjacent to the one including the first hinge elements (3) so that the grating (4) can be hinged to the side (1a) of the frame (1) by means of one or other of its adjacent sides in such a manner that the bars (5) of the grating (4) are inclined relative to the hinged side (1a) of the frame (1) in the direction of the flow of surface water along the roadway in order to take in the water between the bars (5) of the grating (4).

2. Gully according to claim 1, **characterised in that** it comprises a second square grating (4) with inclined bars (5) which comprises first and second hinge elements (3) respectively on two of its adjacent sides and which can be hinged by means of one of its adjacent sides to the side (1a) of the rectangular frame (1) provided with hinge elements (2) by being disposed side by side with the first grating (4) in such a manner that its bars (5) are inclined in the direction of the flow of surface water along the roadway in order to take in the surface water between the bars (5) of the second grating (4), wherein the bars (5) of the second grating (4) may or may not be parallel to those of the first grating (4) in the direction of the flow of surface water arriving at the second grating.

3. Gully according to claim 1 or claim 2, **characterised in that** it comprises a second frame (1) in the form of a quadrilateral identical to the aforementioned frame (1) and capable of receiving at least one grating (4) identical to one of the aforementioned gratings (4) in such a manner that it can hinged by means of one of its adjacent sides to the side (1a) of the second frame (1) provided with hinge elements (2) and **in that** the two frames (1) can be butt-jointed by means of their respective sides by means of a projection (6) integral with the side of one of the two frames (1) and a hole (7) in the adjacent side of the other frame (1) engaged by the projection (6).

## Patentansprüche

1. Gully umfassend einen Rahmen (1) in Form eines Vierecks, der in eine Fahrbahn (C) integriert sein kann und der auf einer (1a) seiner beiden Seiten Gelenkelemente (2) umfasst, und mindestens einen viereckigen Rost (4) zum Verschluss des Rahmens (1), umfassend parallele Stäbe (5), die im Verhältnis zu den Seiten des Rosts (4) geneigt sind, und die ersten Gelenkelemente (3) auf der einen seiner Seiten mit denjenigen (2) der Seite des Rahmens (1) zusammen wirken, um ihm zu erlauben, dass er durch ein Gelenk an dieser Seite angebracht wird, **dadurch gekennzeichnet, dass** der Rost (4) ebenfalls zweite Gelenkelemente (3) umfasst, die auf der einen der Seiten des Rosts (4) neben derjenigen, die die ersten Gelenkelemente (3) umfasst, angeordnet sind, um zu erlauben, dass der Rost (4) durch die eine oder die andere seiner angrenzenden Seiten durch ein Gelenk an der Seite (1a) des Rahmens (1) angebracht werden kann, derart, dass die Stäbe (5) des Rosts (4) relativ zur Gelenkseite (1a) des Rahmens (1), in Ablaufrichtung des Abfließwassers entlang der Fahrbahn, geneigt sind, um das Wasser zwischen den Stäben (5) des Rosts (4) aufzunehmen.

2. Gully nach Anspruch 1, **dadurch gekennzeichnet, dass** er einen zweiten viereckigen Rost (4) mit geneigten Stäben (5) umfasst, umfassend erste bzw. zweite Gelenkelemente (3) an zwei seiner angrenzenden Seiten, wobei er durch ein Gelenk an einer seiner angrenzenden Seiten an der Seite (1a) mit Gelenkelementen (2) des Rahmens (1) in Form eines Vierecks angebracht ist, wobei er nebeneinander mit dem ersten Rost (4) angeordnet ist, derart, dass seine Stäbe (5) in der Ablaufrichtung des Abfließwassers entlang der Fahrbahn geneigt sind, um das Abfließwasser zwischen den Stäben (5) des zweiten Rosts (4) aufzunehmen, wobei die Stäbe (5) des zweiten Rosts (4) parallel zu denjenigen des ersten Rosts (4) entlang der Ablaufrichtung des Abfließwassers, das am zweiten Rost einfließt, sein können oder nicht.

3. Gully nach Anspruch 1 oder 2, **dadurch gekennzeichnet, dass** er einen zweiten Rahmen (1) in Form eines Vierecks umfasst, der identisch ist mit dem vorstehend genannten Rahmen (1), und der in der Lage ist, mindestens einen Rost (4) aufzunehmen, der identisch ist mit einem der vorstehend genannten Roste, derart, dass er durch ein Gelenk an der einen seiner an die Seite (1a) mit den Gelenkelementen (2) des zweiten Rahmens (1) angrenzenden Seiten angebracht ist, und dadurch, dass die beiden Rahmen (1) an ihren entsprechenden Seiten durch einen Zapfen (6), der mit der Seite des einen der beiden Rahmen (1) wechselseitig haftet, und einem Fenster (7) der angrenzenden Seite des anderen Rahmens (1), in das der Zapfen (6) eingreift, fugendicht zusammengesetzt sein können.
